# FASCICULE DE BREVET EUROPEEN

(11) **EP 0 441 081 B1**
(45) Date de publication et mention de la délivrance du brevet: **14.02.1996**
(21) Numéro de dépôt: 90420554.9
(22) Date de dépôt: 20.12.1990
(51) Int. Cl.: B01F 17/00, B01F 17/14, B01F 17/34, A23C 9/16, A23C 9/152, A23K 1/18, A23L 1/035

(54) **Système tensio-actif à base d'un sucroglycéride et son application à la fabrication d'aliments d'allaitement pour jeunes animaux**
Oberflächenaktives Mittel auf der Basis von Zuckerglyzerid und seine Verwendung zur Herstellung von Milchaustauscherprodukten für Jungtiere
Surface active composition on the basis of sugar glyceride and use thereof in the preparation of milk feed products for young animals

(30) Priorité: 22.12.1989 FR 8917070
(43) Date de publication de la demande: 14.08.1991
(73) Titulaire: RHONE-POULENC CHIMIE, F-92408 Courbevoie Cédex (FR)
(72) Inventeur: Mercier, Jean-Michel, F-94320 Thiais (FR); Hecaen, Jean-Pierre, F-93240 Stains (FR)
(74) Mandataire: Seugnet, Jean Louis

(56) Documents cités:
- EP-A- 0 091 331
- AU-A- 16 147
- CH-A- 423 442
- GB-A- 1 163 227
- US-A- 3 671 459
- US-A- 4 137 338

## Description

La présente invention a pour objet un système tensio-actif à base d'un sucroglycéride ; ladite invention vise plus particulièrement un système tensio-actif à base de sucroglycérides et d'au moins un triglycéride ethoxylé associés à une lécithine et son emploi à la fabrication d'aliments d'allaitement de jeunes animaux, notamment des veaux.

Il est connu, pour la fabrication de poudre de lait réengraissé notamment par voie sèche, d'utiliser des agents tensio-actifs non-ioniques ethoxylés, en particulier des huiles ethoxylées ou des acides gras ethoxylés. La demanderesse a trouvé que l'association de ces agents tensio-actifs avec au moins un ester d'un carbohydrate ou un ester d'un polyol permettait d'obtenir une poudre de lait de qualité améliorée.

Il est connu (EP-A-0091331 et CH-A-423442) de stabiliser les émulsions aqueuses de composés hydrophobes ou de corps gras à l'aide de préparations de sucroglycérides pouvant comprendre de la lécithine.

Des systèmes émulsifiants constitués de monoesters de glycérol et d'un inhibiteur non-tensio-actif, tel que le propionate de sodium, formant des complexes interfaciaux avec le monoester, ont été décrits dans AU-A-16147.

Le brevet US-A-4137338 vise des concentrats émulsifiants alimentaires comprenant un véhicule émulsifiant à base de monoester et diester de glycérol (avec des quantités mineures de triester de glycérol), dans lequel sont dispersés des esters d'acides gras éthoxylés (tels que mono et diglycérides éthoxylés) et un émulsifiant alimentaire en phase solide cristalline (acyllacrylates ou succinylmono et diglycérides).

Un émulsifiant hydraté constitué d'un émulsifiant à base d'un mono et diester et éventuellement triester de glycérol alcoxylés émulsifiés dans l'eau, est décrit dans US-A-3671459.

Le système tensio-actif faisant l'objet de l'invention est caractérisé en ce qu'il est constitué de :
- 10 à 90 parties en poids, de préférence de 25 à 75 parties en poids d'au moins un sucroglycéride
- et de 90 à 10 parties en poids, de préférence de 75 à 25 parties en poids d'au moins un triglycéride alkoxylé.

Il est connu que par le terme "sucroglycérides", on désigne le mélange de produits obtenus par transesterification du saccharose et de triglycérides naturels ou de synthèse ; ce mélange contient des monoglycérides, des diglycérides, des triglycérides inaltérés (en faibles quantités), des monoesters et des diesters de saccharose.

Par triglycéride, on entend un ou plusieurs triglycérides d'acides gras aliphatiques saturés ou insaturés ayant au moins 12 atomes de carbone, de préférence 14 à 20 atomes de carbone. On peut évidemment partir d'un triglycéride de synthèse obtenu par réaction du glycérol et d'acides gras mais il est plus intéressant pour des raisons économiques de faire appel aux triglycérides naturels qui sont des mélanges.

Comme triglycérides, on peut citer à titre d'exemples, le saindoux, le suif, l'huile d'arachide, l'huile de beurre, l'huile de graines de coton, l'huile de lin, l'huile de noix de coco, l'huile d'olive, l'huile de palme, l'huile de pépins de raisin, l'huile de poisson, l'huile de soja, l'huile de ricin, l'huile de coprah, l'huile de colza.

On emploie préférentiellement les sucroglycérides d'huile de palme, de saindoux, d'huile de coprah, de suif, de colza. Ils se présentent sous forme liquide (sucroglycérides de colza) ou sous forme de pâtes plus ou moins consistantes se différenciant commercialement par leur point de fusion :

| | |
|---|---|
| - sucroglycérides de saindoux | 47 à 50° C |
| - sucroglycérides de suif | 50 à 55° C |
| - sucroglycérides d'huile de palme | 55 à 58° C |
| - sucroglycérides d'huile de coprah | 60 à62° C |

Un mode préparatoire particulièrement adapté à ces sucroglycérides est décrit dans le brevet français n° 2.463.512. Le deuxième constituant du système tensio-actif peut être par exemple :
- une huile ethoxylée d'origine végétale ou animale (huile de ricin, poisson, coprah, soja, palme, suif beurre... ethoxylée)
- un ester d'acide gras et de polyethylène glycol (acide oleïque, stéarique... ethoxylé)
- ...
Le terme triglycéride (huile) "alkoxylé" vise dans la présente invention aussi bien les produits obtenus par alkoxylation d'un triglycéride par un oxyde d'alkylène que ceux obtenus par transesterification d'un triglycéride par un polyalkylèneglycol.

De même acide gras "alkoxylé" signifie aussi bien les produits obtenus par alkoxylation d'un acide gras par un oxyde d'alkylène que ceux obtenus par esterifiaction d'un acide gras par un polyalkylèneglycol.

Les agents de surface préférentiels formant le deuxième constituant du système sont les huiles ethoxylées et en particulier leurs mélanges. Le système tensio-actif de l'invention peut être préparé par mélange de ses différents constituants à l'état liquide. Dans le cas préférentiel où un des constituants est un sucroglycéride solide à température ambiante, celui-ci est fondu vers 60 à 80° C (de préférence 70 à 75° C) avant d'y introduire les autres constituants à l'état liquide.

La présente invention a également pour objet une composition tensio-active comprenant :
- de 95 à 5 parties, de préférence de 85 à 25 parties en poids du système tensio-actif ci-dessus défini
- et de 5 à 95 parties, de préférence de 15 à 75 parties en poids d'un phospholipide.

Parmi les phospholipides on peut citer les lécithines brutes d'origine animale ou végétale telles que la lécithine de soja. On peut également mentionner les lécithines pauvres en phosphatidylcholine, c'est-à-dire les fractions de lécithines insolubles dans l'alcool ; ces fractions contiennent moins de 15 % en poids, et généralement de 8 à 12 % en poids de phosphatidylcholine par rapport au poids de phosphatides.

La composition tensio-active de l'invention peut être réalisée par mélange du phospholipide au système tensio-actif préparé comme ci-dessus mentionné. Si nécessaire la compatibilité du système tensio-actif avec le phospholipide peut être améliorée par addition d'une huile d'origine animale ou végétale.

Ainsi la compatibilité entre une lécithine et un système tensio-actif à base d'un sucroglycéride et d'au moins une huile ethoxylée peut être améliorée, si nécessaire, par addition d'huile de soja.

La composition tensio-active ci-dessus décrite peut être utilisée pour la préparation de dispersions de matières grasses dans un milieu aqueux contenant des protéines du lait. Elle est particulièrement performante pour préparer des laits réengraissés pour l'allaitement de jeunes animaux et principalement pour fabriquer de la poudre de lait réengraissé ou de la poudre de lactoserum réengraissé, de préférence par voie sèche.

La nature des constituants de la composition tensio-active ainsi que les quantités respectives de ceux-ci sont de préférence choisies de manière à ce que le HLB global de ladite composition soit voisin du HLB requis pour disperser le gras utilisé pour réengraisser la poudre de lait ou de lactoserum. Les doses de composition tensio-active à utiliser sont de l'ordre de 1 à 20 %, de préférence de 4 à 10 % en poids par rapport au poids de gras utilisé pour le réengraissement.

Le procédé de réengraissement par voie sèche de la poudre de lait ou de lactoserum est réalisé d'une manière connue par introduction séparée ou simultanée du système tensio-actif et du phospholipide dans la matière grasse liquide puis pulvérisation du mélange obtenu sur la poudre maigre brassée dans un mélangeur ou mixée en turbulence dans un cyclône.

Les exemples suivants sont donnés à titre indicatif et ne peuvent être considérés comme une limite du domaine et de l'esprit de l'invention.

### EXEMPLE 1

### Préparation du mélange gras + émulsifiant

Dans 93 parties en poids de suif fondu à 70°C, on introduit simultanément ou séparément
- 3 parties en poids d'un système émulsionnant comprenant
   . 1,5 partie en poids de CELYNOL MST 11® (sucroglycéride de suif commercialisé par SFOS)
   . 1,5 partie en poids de CEMULSOL X 1697® (huile ethoxylée commercialisée par SFOS)
- 4 parties en poids de lecithine brute de soja à 38 % en poids d'huile
Le mélange est homogenéisé.

### Réengraissement de la poudre de lait (voie sèche)

Le mélange homogène obtenu est pulvérisé sur du spray (poudre de lait écrémé, concentré, atomisé) de façon à obtenir une poudre à 40 % en poids de matière grasse (gras + émulsifiant). Le taux de matière grasse est ensuite ramené à 20 % par addition de spray.

### Reconstitution du lait

L'opération est réalisée dans un becher métallique de 2 litres, de 190 mm de hauteur et de 120 mm de diamètre ; le becher est muni d'une pale centripète de 40 mm de diamètre tournant à une vitesse de 2000 tours/minute et d'une contrepale fixe.

200 g de poudre de lait réengraissé à 20 % de matière grasse sont introduits dans 800 g d'eau de ville à 63°C, sous agitation. Après 5 minutes d'agitation la température finale du lait reconstitué est de l'ordre de 45°C.

### Dosage de la matière grasse

On prélève 11 ml d'émulsion du becher de reconstitution à l'aide d'une pipette à lait pour dosage butyrométrique de la teneur en matière grasse. On mesure par dosage butyrométrique (méthode acido-butyrométrique GERBER - NF - V 04.210) la teneur en matière grasse de l'émulsion au temps zéro. On prélève 3 X 100 ml (environ 104-105 g) d'émulsion dans trois ampoules à brome de 250 ml stockées à 45°C. Les temps de repos de chaque échantillon sont définis à partir du temps de fin de préparation de l'échantillon.

Après 15, 30 et 60 minutes respectivement on prélève les 3/4 inférieurs de l'émulsion (soit 75 ml) dans une éprouvette de 100 ml.

L'échantillon de 75 ml est homogenéisé par agitation manuelle de l'éprouvette.

On prélève 11ml d'émulsion sur lesquels on effectue le dosage butyrométrique de la matière grasse. On déduit donc le taux de matière grasse (gras + émulsifiant) pour 100 ml de lait dans les 3/4 inférieurs de l'émulsion. Plus le taux de gras mesuré est proche de celui du temps zéro plus l'émulsion est stable.

Les résultats figurent au tableau I.

### EXEMPLE 2

On répète les opérations décrites à l'exemple 1 à partir de :
- 93 parties en poids de suif
- 3 parties en poids d'un système tensio-actif comprenant
   . 0,75 partie en poids de CELYNOL MST 11®
   . 0,75 partie en poids de CEMULSOL X 1697®
   . 1,5 partie d'huile de ricin ethoxylée contenant 16 motifs oxyde d'ethylène
   . 4 parties en poids de lecithine brute de soja Les résultats figurent au tableau I.

### EXEMPLE 3

On répète les opérations décrites à l'exemple 1 à partir de :
- 93 parties en poids de suif
- 3 parties en poids d'huile de ricin ethoxylée contenant 16 motifs oxyde d'ethylène
- 4 parties en poids de lecithine brute de soja Les résultats figurent au tableau I.

### EXEMPLE 4

### Dispersion des matières solides lors de la reconstitution du lait

Les aliments pour veau contiennent outre de la poudre de lait réengraissée des matières solides du type farines, compléments minéraux vitaminés qui se mouillent plus ou moins bien lors de la reconstitution du lait et ont tendance à sédimenter ou à floculer.

Le test suivant a pour but de montrer le très bon pouvoir dispersant de la composition tensio-active de l'invention.

On prépare un aliment de finition pour veau à partir de :
- poudre de lait à 40 % de matière grasse obtenue par réengraissement à l'aide de mélange gras + émulsifiant de l'exemple 1
- poudre de lait maigre
- amidon
- farine
- acides aminés
- et complément minéral vitaminé
Les différentes proportions des différents composants de l'aliment de finition sont telles que l'aliment contient environ 23 % en poids de matière grasse.

On introduit 20 g d'aliment de finition dans 80 g d'eau pour reconstituer 100 g de lait.

Le lait est stocké dans une éprouvette de 100 ml pendant 1/2 heure. La hauteur de sédiment est notée en millimètres ainsi que la présence ou non de floculation. Puis une goutte est prélevée à chacun des niveaux suivants : 92 ml, 40 ml, 20 ml, 10 ml de l'éprouvette.

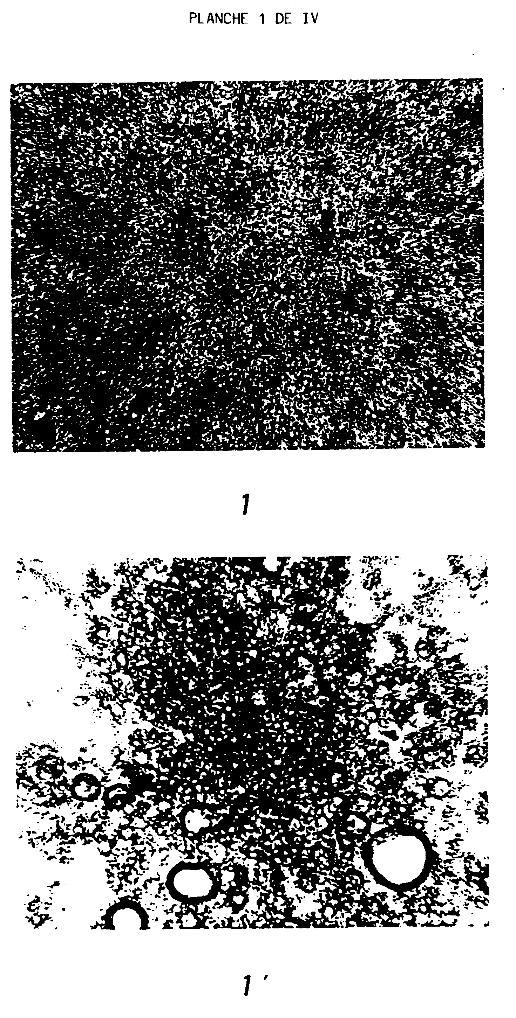

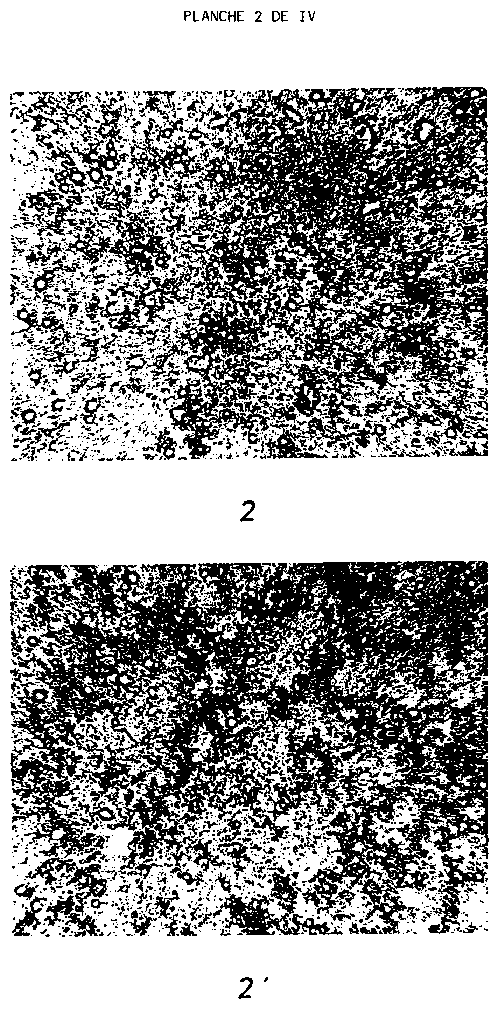

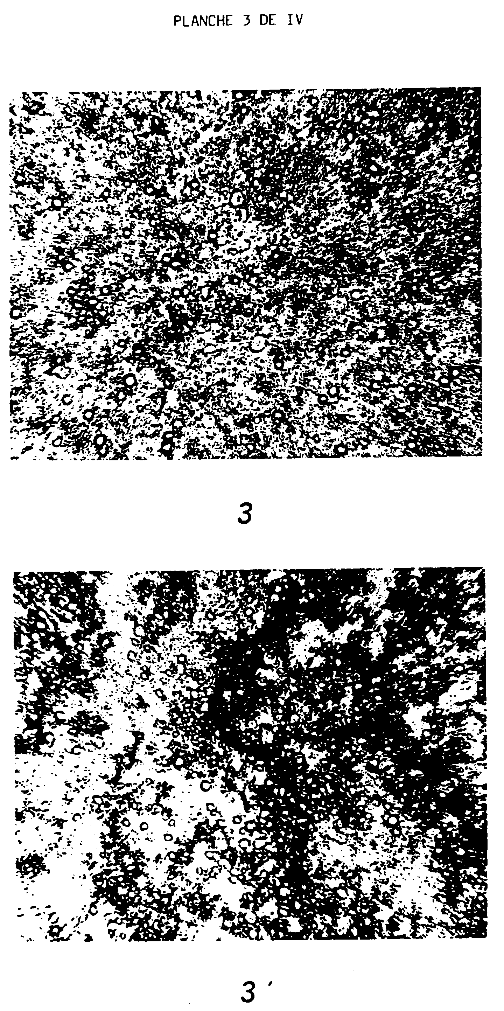

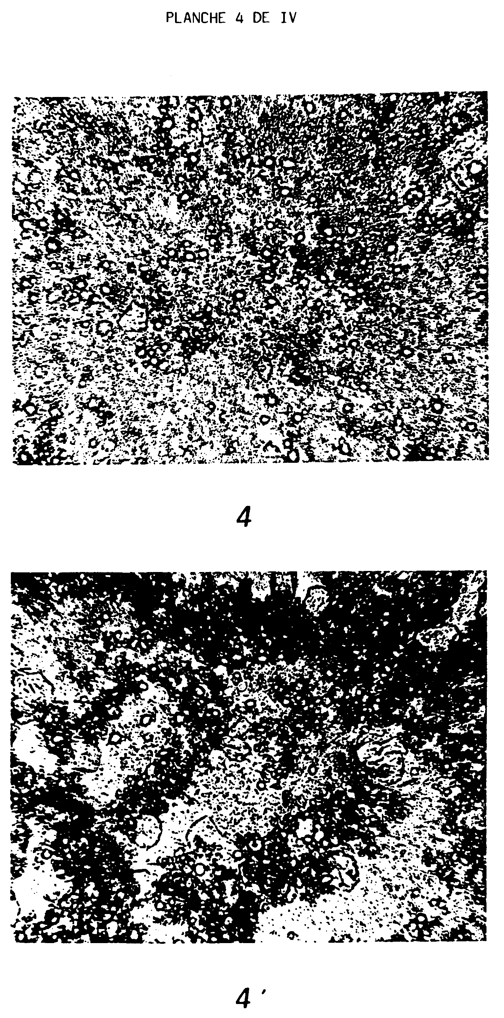

Ces différents prélèvements sont observés au microscope ; des microphotographies sont effectuées (photos n° 1, 2, 3, 4 - grossissement X 100).

La même opération est effectuée à partir d'un aliment de finition pour veau dont la poudre de lait à 40 % de matière grasse a été obtenue par réengraissement à l'aide du mélange gras + émulsifiant de l'exemple 3. Les autres ingrédients de l'aliment ne sont pas modifiés. La hauteur de sédiment est notée avec la présence ou non de floculation. Des microphotographies des différents prélèvements sont effectuées (photos n° 1', 2', 3', 4' - grossissement X 100).

On constate les résultats suivants :
- sédimentation - floculation

| Aliment préparé avec l'émulsifiant de | Sédiment | Floculat |
|---|---|---|
| l'exemple 1 | 4 mm | pas visible |
| l'exemple 3 | 5 mm | 12 mm |

- microphotographies

L'aliment préparé à partir de l'émulsifiant de l'exemple 1 présente une meilleure répartition des grosses particules sur l'ensemble des niveaux. On constate également l'absence d'agglomération qui pourrait correspondre à l'absence de floculation citée précédemment.

On a également constaté que lors de la reconstitution du lait et/ou de l'aliment en utilisant les compositions tensio-actives décrites dans les exemples 1 et 2, le volume de mousse formé est très faible et disparait rapidement.

**TABLEAU I**

| EXEMPLE | TENEUR EN MATIERE GRASSE APRES | | | |
|---|---|---|---|---|
| | 0 MIN | 15 MIN | 30 MIN | 60 MIN |
| 1 | 4,3 | 3,8 | 3,45 | 2,75 |
| 2 | 4,25 | 4,05 | 3,8 | 3,35 |
| 3 | 4,3 | 3,6 | 3,3 | 2,7 |

## Revendications

1. Système tensio-actif caractérisé en ce qu'il est constitué de :
- 10 à 90 parties en poids d'au moins un sucroglycéride
- et de 90 à 10 parties en poids d'au moins un triglycéride alkoxylé

2. Système tensio-actif selon la revendication 1 caractérisé en ce qu'il est constitué de :
- 25 à 75 parties en poids d'au moins un sucroglycéride
- et de 75 à 25 parties en poids d'au moins un triglycéride alkoxylé

3. Composition tensio-active comprenant :
- de 95 à 5 parties en poids du système tensio-actif faisant l'objet de la revendication 1 ou 2
- et de 5 à 95 parties en poids d'un phospholipide.

4. Composition tensio-active comprenant :
- de 85 à 25 parties en poids du système tensio-actif faisant l'objet de la revendication 1 ou 2
- et de 15 à 75 parties en poids d'un phospholipide.

5. Système tensio-actif ou composition tensio-active selon l'une quelconque des revendications 1 à 4, caractérisé(e) en ce qu'un des constituants dudit système tensio-actif est une huile éthoxylée ou un mélange d'huiles éthoxylées.

6. Composition tensio-active selon l'une quelconque des revendications 3 à 5, caractérisée en ce que le phospholipide est une lécithine brute ou une lécithine pauvre en phosphatidylcholine.

7. Utilisation de la composition tensio-active faisant l'objet de l'une quelconque des revendications 3 à 6 pour la préparation de dispersions de matières grasses dans un milieu aqueux contenant des protéines de lait.

8. Utilisation de la composition tensio-active faisant l'objet de l'une quelconque des revendications 3 à 6 pour la préparation de lait réengraissé pour l'allaitement de jeunes animaux.

## Claims

1. A surface-active system characterised in that it is formed by:
- 10 to 90 parts by weight of at least one sucroglyceride, and
- 90 to 10 parts by weight of at least one alkoxylated triglyceride.

2. A surface-active system according to claim 1 characterised in that it is formed by:
- 25 to 75 parts by weight of at least one sucroglyceride, and
- 75 to 25 parts by weight of at least one alkoxylated triglyceride.

3. A surface-active composition comprising:
- 95 to 5 parts by weight of the surface-active system in accordance with claim 1 or claim 2, and
- 5 to 95 parts by weight of a phospholipid.

4. A surface-active composition comprising:
- 85 to 25 parts by weight of the surface-active system in accordance with claim 1 or claim 2, and
- 15 to 75 parts by weight of a phospholipid.

5. A surface-active system or surface-active composition according to any one of claims 1 to 4 characterised in that one of the constituents of the surface-active system is an ethoxylated oil or a mixture of ethoxylated oils.

6. A surface-active composition according to any one of claims 3 to 5 characterised in that the phospholipid is a crude lecithin or a lecithin with a low content of phosphatidylcholine.

7. Use of the surface-active composition according to any one of claims 3 to 6 for the preparation of dispersions of fatty substances in an aqueous medium containing milk proteins.

8. Use of the surface-active composition according to any one of claims 3 to 6 for the preparation of refattened milk for feeding young animals.

## Patentansprüche

1. Oberflächenaktives System, dadurch gekennzeichnet, daß es besteht aus:
- 10 bis 90 Gew.-Teilen mindestens eines Zuckerglycerids und
- 90 bis 10 Gew.-Teilen mindestens eines alkoxylierten Triglycerids.

2. Oberflächenaktives System nach Anspruch 1, dadurch gekennzeichnet, daß es besteht aus:
- 25 bis 75 Gew.-Teilen mindestens eines Zuckerglycerids und
- 75 bis 25 Gew.-Teilen mindestens eines alkoxylierten Triglycerids.

3. Oberflächenaktive Substanz aus:
- 95 bis 5 Gew.-Teilen eines oberflächenaktiven Systems nach einem der Ansprüche 1 oder 2 und
- 5 bis 95 Gew.-Teilen eines Phospholipids.

4. Oberflächenaktive Zusammensetzung aus:
- 85 bis 25 Gew.-Teilen eines oberflächenaktiven Systems nach einem der Ansprüche 1 oder 2 und
- 15 bis 75 Gew.-Teilen eines Phospholipids.

5. Oberflächenaktives System oder oberflächenaktive Zusammensetzung nach einem der Ansprüche 1 bis 4, dadurch gekennzeichnet, daß mindestens eines der Bestandteile des oberflächenaktiven Systems ein ethoxyliertes Öl oder eine Mischung aus ethoxylierten Ölen ist.

6. Oberflächenaktive Zusammensetzung nach einem der Ansprüche 3 bis 5, dadurch gekennzeichnet, daß das Phospholipid ein rohes Lecithin oder ein an Phosphatidylcholin armes Lecithin ist.

7. Verwendung einer oberflächenaktiven Zusammensetzung nach einem der Ansprüche 3 bis 6 zur Herstellung einer Dispersion aus Fettmaterialien in einem wäßrigen Medium, das Milchproteine enthält.

8. Verwendung einer oberflächenaktiven Zusammensetzung nach einem der Ansprüche 3 bis 6 zur Herstellung einer Fett-angereicherten Milch zum Stillen von jungen Tieren.
